Europäisches Patentamt

European Patent Office

Office européen des brevets

(19)

(11) Veröffentlichungsnummer: **0 676 785 A2**

(12) **EUROPÄISCHE PATENTANMELDUNG**

(21) Anmeldenummer: **95101025.5**

(22) Anmeldetag: **26.01.95**

(51) Int. Cl.6: **H01H 35/34**, H01H 36/00

(30) Priorität: **06.04.94 DE 9405685 U**

(43) Veröffentlichungstag der Anmeldung:
**11.10.95 Patentblatt 95/41**

(84) Benannte Vertragsstaaten:
**AT BE CH DE DK ES FR GB GR IE IT LI LU NL PT SE**

(71) Anmelder: **FILTERWERK MANN & HUMMEL GMBH**
**Postfach 4 09**
**D-71631 Ludwigsburg (DE)**

(72) Erfinder: **Sauer, Bernd**
**Im Vogelsang 7**
**D-74182 Obersulm (DE)**
Erfinder: **Wolf, Michael**
**Haslacher Weg 15**
**D-71126 Gäufelden (DE)**

(74) Vertreter: **Voth, Gerhard, Dipl.-Ing.**
**FILTERWERK MANN + HUMMEL GMBH**
**Postfach 4 09**
**D-71631 Ludwigsburg (DE)**

(54) **Differenzdruckschalter.**

(57) Differenzdruckschalter für Luftentölelemente mit einer, die Druckzonen trennenden Rollmembrane (5).

Fig.1

Das breite Anwendungsfeld der Druckmessung hat zur Entwicklung der unterschiedlichsten Druckaufnehmertypen geführt, wobei neben den physikalischen Aufnahmeprinzipien (mechanisch, induktiv, kapazitiv usw.) eine Vielzahl konstruktiver Lösungen verwirklicht wurden.

Der Druck ist definiert als Kraft pro Fläche mit der Einheit

$$1 \text{ bar} = 1*10 \text{ N/m} = 1*10 \text{ Pascal.}$$

Als Nullpunkt einer Druckskala wird entweder der Druck des absoluten Vakuums oder der Atmosphärendruck gewählt.

Man unterscheidet deshalb den
- Absolutdruck: Bezugspunkt ist das Vakuum (0 bar)
- Überdruck/Unterdruck: Bezugspunkt ist der Athmosphärendruck von ca. 1 bar; 5 bar Überdruck entsprechen also einem Absolutdruck von ca. 6 bar.
- Differenzdruck: Angegeben wird die Differenz zwischen zwei in demselben Bezugssystem gemessenen Drücken.

Dementsprechend können Druckaufnehmer grundsätzlich in Absolut-Über/Unter- und Differenzdruckaufnehmer unterschieden werden. Differenzdruckaufnehmer messen die Differenz der in zwei getrennten Kammern erfassten Drücke.

In Absolutdruckaufnehmern ist eine der zwei Kammern evakuiert, so daß der gemessene Druck dem Absoluten entspricht.

Über- und Unterdruckaufnehmer benötigen nur eine Druckkammer, da gegen den äußeren Athmosphärendruck verglichen wird.

Diese lassen sich folglicherweise einfacher realisieren als die beiden anderen Aufnehmerarten.

Absolutdruckaufnehmer sind infolge der Vakuumkammer in der Herstellung sehr aufwendig.

Der Aufwand für die Realisierung eines Druckaufnehmers ist neben der Aufnahmeart auch von der Präzision bzw. Meßtoleranz und dem Betrag des zu messenden Druckes abhängig.

Infolge der einfacheren Realisierung gibt es zahlreiche Über- und Unterdruckaufnehmer. Sie werden dort angewandt wo gegen Atmosphäre gemessen werden kann, wie zum Beispiel für die Bestimmung des Verschmutzungsgrades von Luft- und Ölfiltern in Fahrzeugen.

Im Laufe des Betriebs verschmutzen die Filter zunehmend. Dies hat einen Anstieg des Druckverlustes zwischen Schmutzseite (vor Element) und Reinseite (nach Element) zur Folge.

Wird der Druckverlust zu groß muß das Filterelement ausgetauscht werden.

Die Bestimmung des Druckverlustes der Filterelemente in Hydraulik und Pneumatik ist dagegen nicht so einfach.

Da hier je nach Anlage verschiedene Betriebsdrücke herrschen, kann nicht gegen Atmosphäre gemessen sondern muß der Differenzdruck aufgenommen werden.

Eine weitere Schwierigkeit sind die hohen Betriebsdrücke. Die Herstellung einer Verbindung von den Druckkammern nach außen ist somit nur sehr schwer möglich.

Grundsätzlich gibt es drei Varianten von Wartungsgebern:
1.) Wartungsanzeiger (optisch)
2.) Wartungsschalter (elektrisch)
3.) Wartungsschalter/-anzeiger als Kombination
Beim Schalter wird je nach Schaltart in Öffner, Schließer und Wechsler unterschieden.

Bekannt sind Lösungen mittels Kolben und Rückstellfeder.

Das Problem liegt jedoch darin daß über den Kolben, der immer ein gewisses Spiel zum bewegen haben muß, ein Kurzschluß bzw. Bypaß entstehen kann. So kann Medium direkt von der Schmutzzur Reinseite gelangen und das Filterelement umgehen
.

Bei der Hydraulik ist dies nicht ganz so kritisch. In Anlagen bei denen mittels Luftentölfilter Reinstluft erzeugt werden soll, kann dies jedoch den Wirkungsgrad des Filters drastisch verschlechtern.

Um eine Bewegung bei gleichzeitiger Dichtheit zu ermöglichen werden deshalb häufig Kolben in Verbindung mit Membranen verwendet.

Die üblichen Membranen ermöglichen jedoch meist nur geringe Hübe. Oftmals wurden deshalb Gummibalge zur Abdichtung verwendet, die jedoch eine undefinierbare Kraftumsetzung des Drucks bewirken, wodurch eine reproduzierbare Druckaufnahme nur schwer möglich ist.

Auch Kolben in Verbindung mit O-Ringen als Dichtführung einzusetzen, ist bei Luftentölelementen unzureichend.

Die Rollmembran als Sonderform der Membran ermöglicht dagegen einen relativ großen Hub, bei einer reproduzierbaren Hubbewegung und minimalem Gehäusedurchmesser.

Es ist somit Aufgabe der Erfindung, einen Differenzdruckschalter und/oder -anzeiger der eingangs genannten Art dahingehend zu verbessern, daß ein Schalter-/Anzeigensystem im Baukastenprinzip entsteht, das leicht montierbar ist, konstengünstig ist, hohen Drücken standhält und geringe Abmaße ermöglicht.

Erfindungsgemäß wird die Aufgabe gelöst, daß insbesondere bei Luftentölelementen, die unterschiedlichen Druckzonen durch eine Rollmembrane getrennt sind. Vorteilhafte Weiterbildungen ergeben sich aus den Unteransprüchen.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. Die Zeichnungen zeigen:

Figur 1    Wartungsanzeiger,

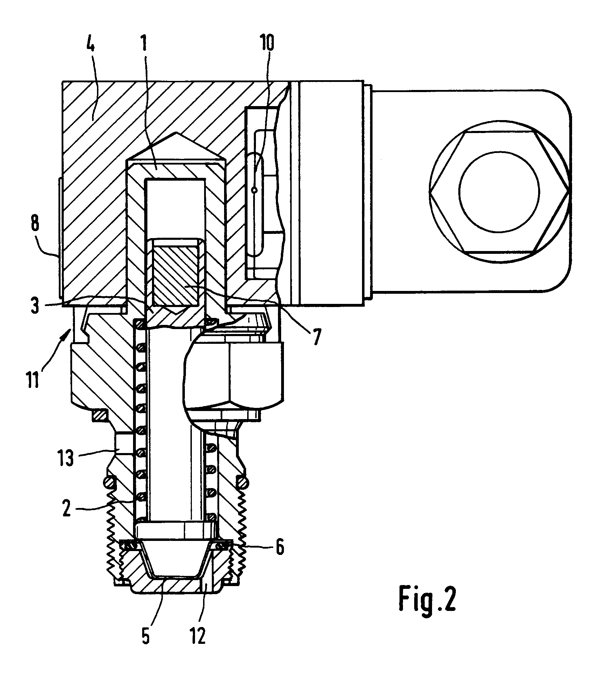

Figur 2    Wartungsschalter,

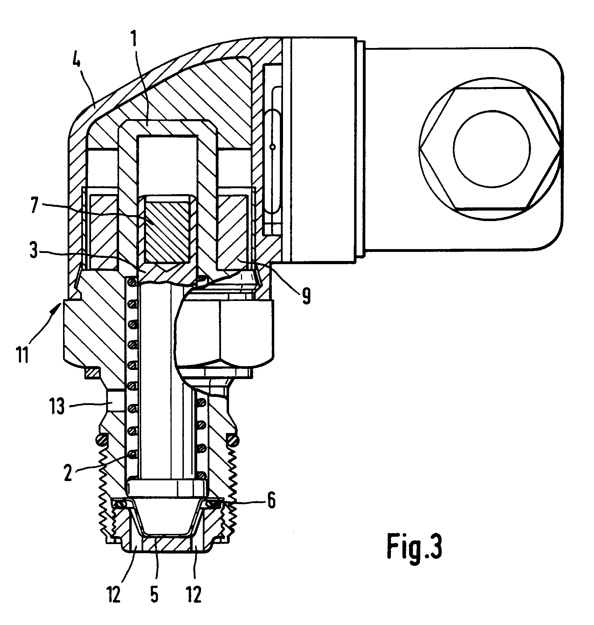

Figur 3    Anzeigeschalter.

Es wurden alle drei möglichen Wartungsgebertypen im Baukasten-Steck- bzw. Schnappsystem entwickelt. Das heißt, alle drei haben das gleiche Grundbausystem.

Beim Anzeiger wird auf den Stellkolbengrundkörper 1 ein Schalt- und/oder Anzeigeteil 4 mit durchsichtigem Anzeigebereich 8 und Druckskala aufgeschnappt, beim Schalter ein Schaltgehäuse und beim Schalter/-anzeiger ein Schalt- und Anzeigeteil 4 mit durchsichtigem Anzeigebereich 8 und Druckskala und integriertem Schalter.

Der Differenzdruck wirkt auf eine Rollmembran mit Kolben. Als Rückstellung bzw. Gegenkraft dient eine Rückstellfeder 2, die ins Gehäuse integriert ist.

Integriert wird eine sehr kleine Rollmembrane 5 im Einschraubgewinde (M 18 x 1.5).

Außerdem ist diese Rollmembrane 5 gewebeverstärkt, wodurch sie Differenzdrücke bis zu 8 bar ermöglicht.

In der Regel sind Rollmembrane 5 mit einer angespritzten Wulst versehen. Bei dieser kleinen Rollmembrane 5 ist dies aber nicht möglich, da sie nur 0.18 mmm stark ist. Hier wird sie aus Membrantuch tiefgezogen und ausgestanzt. Die Rollmembrane 5 wird mittels eingelegte O-Ring fest eingespannt.

Die Rollmembrane 5 wird in eine Buchse mit O-Ring eingelegt.

Der Stellkolbengrundkörper 1 ist vorzugsweise mit zwei Bohrungen 12 für den Druckabgriff der Schmutzseite versehen.

Die Innenform ist konisch ausgelegt im Winkel der Rollmembrane 5 und des Stellkolbenendes. Damit ist eine optimale Abrollbewegung und gleichzeitige Führung des Kolben/Membransystems bei der Montage möglich.

Die Anordnung Buchse O-Ring/Membran/Kolben/Kolbenführung in der Verschluss-Schraube ist so, daß bei zunehmendem Druck die Dichtwirkung durch Verformung des O-Ringes in den Dichtspalt verstärkt wird. Außerdem bleibt der Gehäusedurchmesser auf der die Rollmembran abrollt immer gleich.

Das Grundbauteil wird folgendermaßen montiert:

Zuerst wird der Stabmagnet im Kolben durch Kleben/Bördeln fixiert. In die Buchse wird der O-Ring eingedrückt und die Rollmembrane eingelegt. Die Druckfeder wird über den Stellkolben geführt. Der Stellkolben 3 mit Rückstellfeder 2 wird nun mit der konischen Unterseite in die konische Öffnung Membrane/Buchse aufgesetzt und in die Verschluss-Schraube eingeführt. Die Buchse wird auf Anschlag gepreßt und evtl. durch Bördeln des unteren Randes am Gewinde der Verschluß-Schraube gesichert.

Damit über das Gewinde der Verschluß-Schraube kein Bypass entstehen kann, wird ein O-Ring in einem Einstich der Verschluß-Schraube montiert. Ein Alu-Dichtring wird übers Gewinde geschoben. Der O-Ring wird mittels Montagedorn am Gewindeeinstich der Verschluß-Schraube montiert.

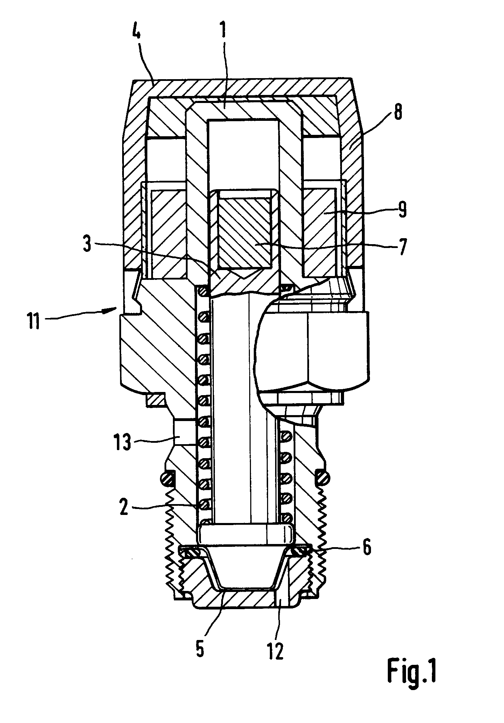

Beim Wartungsanzeiger (Figur 1) wird der Ringmagnet 9 aufgesetzt und ein Schalt- und/oder Anzeigeteil 4 mit durchsichtigem Anzeigebereich 8 aufgeschnappt. Der Ringmagnet 9 dient beim Wartungsanzeiger als Anzeigeelement und gleichzeitig beim Schalter/Anzeiger als Schaltmagnet.

Beim Schalter schaltet der magnetische Bereich 7 des Stellkolbens direkt den Reedkontakt an. Der Reed-Kontakt wird gebogen, ins Schaltgehäuse eingeklebt und an einen Gerätestecker mit Dose angeschlossen (Schutzart IP 65). Es wird ein Wechsler-Reed-Kontakt verwendet, womit alle Schaltarten (Öffner, Schließer, Wechsler) möglich sind. Wahlweise ist noch eine reine Schliesservariante bei gleichen Einbaumaßen möglich, wodurch sich Montage-, Konfektions- und Einkaufskosten im Vergleich zum Wechsler einsparen lassen.

Der Druckabgriff der Reinseite (kleinerer Druck) nach dem Filterelement, geschieht über eine Bohrung 13 zwischen Schlüsselansatz- und Einschraubgewinde der Verschluß-Schraube.

Die Verstärkung der Einspannkraft der Membrane bei Druckzunahme erfolgt durch die Einspannsystem/anordnung.

Bezugszeichenliste

1    Stellkolbengrundkörper
2    Rückstellfeder
3    Stellkolben
4    Schalt- und/oder Anzeigeteil
5    Rollmembrane
6    O-Ring
7    magnetischer Bereich
8    Anzeigebereich
9    Ringmagnet
10    Reed-Kontakt
11    Steck- bzw. Schnappverbindung

12    Bohrung

13    Bohrung

**Patentansprüche**

1.   Differenzdruckschalter und/oder Anzeiger mit durch Rückstellfeder 2 geführtem Stellkolben 3, insbesondere für Luftentölelemente, wobei die unterschiedlichen Druckzonen durch eine Rollmembrane 5 getrennt sind.

2.   Vorrichtung nach Anspruch 1, dadurch gekennzeichnet, daß die Rollmembrane 5 gewebeverstärkt ist.

3.   Vorrichtung nach einem oder mehreren der vorgenannten Ansprüche, dadurch gekennzeichnet, daß die Rollmembrane 5 kraftschlüssig montiert ist.

4.   Vorrichtung nach einem oder mehreren der vorgenannten Ansprüche, dadurch gekennzeichnet, daß zur Erhöhung des Kraftschlusses ein O-Ring zwischen Rollmembrane 5 und Gehäuse eingelegt ist.

5.   Vorrichtung nach einem oder mehreren der vorgenannten Ansprüche, dadurch gekennzeichnet, daß die, die Rollmembrane 5 einschließende Stellkolben-/Gehäusekombination, konisch ausgestaltet ist.

6.   Vorrichtung nach einem oder mehreren der vorgenannten Ansprüche, dadurch gekennzeichnet, daß der Stellkolben 3 einen magnetischen Bereich 7 aufweist.

7.   Vorrichtung nach einem oder mehreren der vorgenannten Ansprüche, dadurch gekennzeichnet, daß die Vorrichtung über einen durchsichtigen Anzeigebereich 8 verfügt.

8.   Vorrichtungen nach einem oder mehreren der vorgenannten Ansprüche, dadurch gekennzeichnet, daß die Vorrichtung einen, um den magnetischen Bereich 7 des Stellkolbens 3 herum angebrachten, Ringmagneten 9 aufweist.

9.   Vorrichtung nach einem oder mehreren der vorgenannten Ansprüche, dadurch gekennzeichnet, daß die Vorrichtung über einen, im magnetischen Bereich des Stellkolbens montierten, Reed-Kontakt 10 verfügt.

10.  Vorrichtung nach einem oder mehreren der vorgenannten Ansprüche, dadurch gekennzeichnet, daß das Schalt- und/oder Anzeigeteil mit dem Stellkolbengrundkörper 1 mittels Steck- bzw. Schnappverbindung 11 verbunden ist.

Fig.1

Fig.2

Fig.3